(19) Europäisches Patentamt
European Patent Office
Office européen des brevets

(11) EP 2 055 724 B1

(12) EUROPEAN PATENT SPECIFICATION

(45) Date of publication and mention of the grant of the patent:
**22.09.2010 Bulletin 2010/38**

(21) Application number: **08019288.3**

(22) Date of filing: **04.11.2008**

(51) Int Cl.:
***C08F 8/12*** *(2006.01)*
***C08F 8/14*** *(2006.01)*
***C08J 9/20*** *(2006.01)*
***C08F 212/14*** *(2006.01)*
***C08F 212/08*** *(2006.01)*
*C08F 2/18 (2006.01)*
*C08F 220/20 (2006.01)*

# (54) Production method of porous resin bead

Herstellungsverfahren für poröse Harzperlen

Procédé de fabrication de billes de résine poreuse

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **05.11.2007 JP 2007286835**

(43) Date of publication of application:
**06.05.2009 Bulletin 2009/19**

(73) Proprietor: **Nitto Denko Corporation**
**Ibaraki-shi, Osaka 567-8680 (JP)**

(72) Inventors:
- **Mori, Kenjiro**
**Ibaraki-shi**
**Osaka (JP)**
- **Konishi, Tatsuya**
**Ibaraki-shi**
**Osaka (JP)**
- **Maeta, Eri**
**Ibaraki-shi**
**Osaka 567-8680 (JP)**

(74) Representative: **Grünecker, Kinkeldey, Stockmair & Schwanhäusser**
**Anwaltssozietät**
**Leopoldstrasse 4**
**80802 München (DE)**

(56) References cited:
**EP-A- 0 496 405**
**EP-A- 1 595 895**
**CN-A- 1 670 050**
**US-A- 5 461 017**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 055 724 B1

## Description

### FIELD OF THE INVENTION

The present invention relates to a production method of a porous resin bead that can be suitably used, for example, as a support for solid phase synthesis.

### BACKGROUND OF THE INVENTION

Conventionally, as a polystyrene-based porous resin bead, there are a hydroxystyrene-polyene copolymer (see, Patent Documents 1 and 2) and a copolymer resin obtained by copolymerizing an alkoxystyrene, an aromatic polyvinyl and an aromatic vinyl compound (see, Patent Document 3). These porous resin beads are mainly used as an ion exchange resin, an adsorbent or the like. Accordingly, in such applications, it is heretofore an important target to enhance the substance adsorbing ability per unit volume of the porous resin bead by imparting as much a functional group as possible to the porous resin bead or increasing the specific surface area of the porous resin bead as large as possible.

On the other hand, such porous resin beads have been recently used also as a support for solid phase synthesis, which is a reaction site allowing efficient progress of a chemical synthesis reaction. In such a case, the positions at which the chemical synthesis reaction starts are considered to be functional groups distributed in a crosslinked network structure of the porous resin bead. Accordingly, there is strongly needed a porous resin having an appropriately-sized crosslinked network structure and an appropriate distribution of functional groups according to the kind or amount of a substance to be chemically synthesized.

Patent Document 1 : JP-A-52-023193
Patent Document 2 : JP-A-58-210914
Patent Document 3 : JP-A-05-086132
Patent Document 4 : JP-A-2005-097545

### SUMMARY OF THE INVENTION

The present invention has been made under these circumstances and an object of the present invention is to provide a method for producing a porous resin bead which can be suitably used as a support for solid phase synthesis that allows efficient progress of a chemical synthesis reaction, and particularly, as a solid phase support enabling solid phase synthesis of oligonucleotide with high purity at a high synthesis rate.

According to the present invention, there is provided a method for producing a porous resin bead containing an aromatic vinyl compound-hydroxystyrene-di(meth)acrylate copolymer, the method including: dissolving a monomer mixture containing an aromatic vinyl compound, an acyloxystyrene and a di(meth)acrylate compound, and a polymerization initiator in an organic solvent to obtain a solution containing the monomer mixture and the polymerization initiator; suspending the solution in water in the presence of a dispersion stabilizer; performing a suspension copolymerization to thereby obtain an aromatic vinyl compound-acyloxystyrene-di(meth)acrylate compound copolymer; and hydrolyzing an acyloxy group of the acyloxystyrene monomer component in the copolymer.

In the present invention, the di(meth)acrylate compound is preferably at least one member selected from the group consisting of a (poly)ethylene glycol di(meth)acrylate and an alkanediol di(meth)acrylate.

Furthermore, in the present invention, the monomer mixture preferably contains the acyloxystyrene in a proportion of 80 to 800 μmol/g and the di(meth)acrylate compound in a proportion of 200 to 2,000 μmol/g.

Moreover, in the present invention, preferably, the organic solvent is at least one member selected from the group consisting of a hydrocarbon and an alcohol, and the organic solvent is used in a weight ratio of 0.5 to 2.5 based on the monomer mixture.

According to the present invention, as described above, an aromatic vinyl compound-acyloxystyrene-di(meth) acrylate compound copolymer is produced by a suspension copolymerization of a monomer mixture containing an aromatic vinyl compound, an acyloxystyrene and a di(meth)acrylate compound in predetermined proportions, respectively, and the acyloxy group of the acyloxystyrene monomer component in the copolymer is then hydrolyzed, whereby a porous resin bead containing an aromatic vinyl compound-hydroxystyrene-di(meth)acrylate copolymer is obtained.

Accordingly, the porous resin bead obtained by the method of the present invention has appropriate crosslink density and distribution of hydroxyl groups. Therefore, when this bead is used as a support for solid phase synthesis of oligonucleotide, the reactions performed on the support are not inhibited with each other, so that oligonucleotide can be produced through a solid-phase synthesis with high purity at a high synthesis rate. In particular, according to the present invention, oligonucleotide can be obtained in a high synthesis yield while keeping the proportion of full-length oligonucleotide high.

## DETAILED DESCRIPTION OF THE INVENTION

The method for producing a porous resin bead containing an aromatic vinyl compound-hydroxystyrene-di(meth) acrylate copolymer of the present invention includes dissolving a monomer mixture containing an aromatic vinyl compound, an acyloxystyrene and a di(meth)acrylate compound, and a polymerization initiator in an organic solvent to obtain a solution of the monomer mixture and the polymerization initiator; suspending the solution in water in the presence of a dispersion stabilizer; performing a suspension copolymerization to thereby obtain an aromatic vinyl compound-acyloxystyrene-di(meth)acrylate compound copolymer; and hydrolyzing the acyloxy group of the acyloxystyrene monomer component in the obtained copolymer.

In the present invention, examples of the aromatic vinyl compound include, but are not limited to, styrene, a nucleus alkyl-substituted styrene such as o-methylstyrene, m-methylstyrene, p-methylstyrene, 2,4-dimethylstyrene, ethylstyrene and p-tert-butylstyrene, an α-alkyl-substituted styrene such as α-methylstyrene and α-methyl-p-methylstyrene, and a nucleus halogenated styrene such as chlorostyrene. According to the present invention, among all, styrene is preferably used as the aromatic vinyl compound.

In the present invention, the acyloxystyrene may have, in addition to the acyloxy group, one or a plurality of arbitrary substituents on the aromatic nucleus so long as they do not adversely affect the suspension copolymerization or give no harmful effect when the obtained porous bead is used as a support for solid phase synthesis. Examples of such substituents include an alkyl group or an alkoxyl group having a carbon number of 1 to 5, a halogen atom and a nitro group.

In the present invention, the position of the acyloxy group on the aromatic nucleus of the acyloxystyrene with respect to the vinyl group is not particularly limited but is preferably the para-position. That is, in the present invention, the acyloxystyrene is preferably a p-acyloxystyrene. Further, the alkyl group in the acyl group preferably has a carbon number of 1 to 5. Particularly, in the present invention, p-acetoxystyrene is preferably used as the acyloxystyrene.

In the present invention, the di(meth)acrylate compound means a dimethacrylate or a diacrylate and is preferably at least one member selected from the group consisting of a (poly)ethylene glycol di(meth)acrylate and an alkanediol di(meth)acrylate.

Specific examples of the (poly)ethylene glycol di(meth)acrylate include ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, dipropylene glycol di(meth)acrylate, tripropylene glycol di (meth)acrylate, and polypropylene glycol di(meth)acrylate.

In the present invention, the alkane in the alkanediol di(meth)acrylate preferably has a carbon number of 4 to 10. Accordingly, specific examples of the alkanediol di(meth)acrylate include 1,2-butanediol di(meth)acrylate, 1,3-butanediol di(meth)acrylate, 1,4-butanediol di(meth)acrylate, 1,5-pentanediol di(meth)acrylate, 1,6-hexanediol di(meth) acrylate, 1,9-nonanediol di(meth)acrylate, 1,10-decanediol di(meth)acrylate, 2-methyl-1,8-octanediol di(meth)acrylate, and 1,4-cyclohexanediol di(meth)acrylate.

According to the present invention, in the monomer mixture of an aromatic vinyl compound, an acyloxystyrene and a di(meth)acrylate compound, which is used for the suspension copolymerization, the acyloxystyrene is preferably contained in a proportion of 80 to 800 μmol/g, and more preferably from 200 to 500 μmol/g. If the proportion of the acyloxystyrene in the monomer mixture is less than 80 μmol/g, the porous resin bead to be obtained is low in the amount of the hydroxyl group and when used as a support for solid phase synthesis, the amount of the synthesis reaction product to be obtained is small. On the other hand, if the proportion of the acyloxystyrene in the monomer mixture exceeds 800 μmol/g, since the hydroxyl group density in the porous resin bead to be obtained is high, chemical reactions occurring adjacently to each other on the support are inhibited with each other, resulting in reduction in the purity of the synthesis reaction product to be obtained.

In the monomer mixture, the proportion of the di(meth)acrylate compound is preferably from 200 to 2,000 μmol/g, and more preferably from 300 to 1,500 μmol/g. If the proportion of the di(meth)acrylate compound in the monomer mixture is less than 200 μmol/g, the specific surface area of the porous resin bead to be obtained is extremely small and when used as a support for solid phase synthesis, the amount of the synthesis reaction product to be obtained is small. On the other hand, if the proportion of the di(meth)acrylate compound in the monomer mixture exceeds 2,000 μmol/g, since the swelling degree of the porous resin bead to be obtained in an organic solvent is low, the amount of the synthesis reaction product to be obtained is small.

In the present invention, the suspension copolymerization of the monomer mixture containing an aromatic vinyl compound, an acyloxystyrene and a di(meth)acrylate compound can be performed by a conventionally known normal method. For example, the monomer mixture and a polymerization initiator are dissolved in an organic solvent, a dispersion stabilizer is separately dissolved in water, these two solutions are mixed in a nitrogen stream, the mixed solution is stirred so that the solution obtained by dissolving the monomer mixture and the polymerization initiator in the organic

solvent can be dispersed as fine droplets in water, and the copolymerization is performed with stirring by raising the temperature. The suspension copolymerization reaction may be performed usually with stirring at a reaction temperature of 60 to 90°C over 0.5 to 48 hours, but the copolymerization reaction conditions are not limited thereto.

In the present invention, at least one member selected from the group consisting of a hydrocarbon and an alcohol is used as the organic solvent. In the present invention, the hydrocarbon includes an aliphatic hydrocarbon and an aromatic hydrocarbon, and the aliphatic hydrocarbon may be either saturated or unsaturated but is preferably an aliphatic saturated hydrocarbon having a carbon number of 5 to 12 or an alkylbenzene. Examples of the aliphatic saturated hydrocarbon having a carbon number of 5 to 12 include n-hexane, n-heptane, n-octane, isooctane, undecane and dodecane. Examples of the alkylbenzene include toluene.

On the other hand, the alcohol is preferably an aliphatic alcohol, and more preferably an aliphatic alcohol having a carbon number of 5 to 12. Specific preferred examples thereof include 2-ethylhexyl alcohol, tert-amyl alcohol, nonyl alcohol, 2-octanol, decanol, lauryl alcohol and cyclohexanol. In the present invention, one of these hydrocarbons and alcohols may be used alone, or the hydrocarbon and the alcohol may be used in combination.

In the present invention, the organic solvent is usually used in a weight ratio of organic solvent/monomer of 0.5 to 2.5, preferably from 1.0 to 2.0. If the weight ratio of organic solvent/monomer is less than or exceeds the above-mentioned range, in either case, the specific surface area of the porous resin particle to be obtained becomes small and, for example, when used as a support for solid phase synthesis, the amount of the synthesis reaction product by a chemical reaction is reduced.

The dispersion stabilizer is not particularly limited, and an arbitrary dispersion stabilizer may be used so long as it is conventionally used as a dispersion stabilizer in the suspension polymerization. Examples of the dispersion stabilizer include a hydrophilic protective colloid agent such as polyvinyl alcohol, polyacrylic acid, gelatin, starch and carboxyl methyl cellulose; and a hardly-soluble inorganic powder such as calcium carbonate, magnesium carbonate, calcium phosphate, barium sulfate, calcium sulfate and bentonite. Although not particularly limited, the amount of the dispersion stabilizer used is preferably from 0.01 to 10 wt% based on the water used in the suspension polymerization. If the amount of the dispersion stabilizer is less than 0.01 wt% based on the water used in the suspension polymerization, the stability of suspension polymerization is impaired and a large amount of an aggregate is produced. On the other hand, if the amount of the dispersion stabilizer exceeds 10 wt% based on the water used in the suspension polymerization, a large number of particles which are too fine to use as a support for solid phase synthesis are produced.

Further, the polymerization initiator for use in the suspension polymerization is not particularly limited, and an arbitrary polymerization initiator may be used so long as it is conventionally used as a polymerization initiator in suspension polymerization. Examples of the polymerization initiator include a peroxide such as dibenzoyl peroxide, dilauroyl peroxide, distearoyl peroxide, 1,1-di(tert-butylperoxy)-2-methylcyclohexane, 1,1-di(tert-hexylperoxy)-3,3,5-trimethylcyclohexane, 1,1-di(tert-hexylperoxy)cyclohexane, 1,1-di(tert-butylperoxy)cyclohexane, di-tert-hexyl peroxide, tert-butylcumyl peroxide, di-tert-butyl peroxide, 1,1,3,3-tetramethylbutylperoxy-2-ethylhexanoate, tert-hexylperoxy-2-ethylhexanoate, tert-butylperoxy-2-ethylhexanoate and tert-butylperoxyisopropyl monocarbonate; and an azo compound such as 2,2'-azobisisobutyronitrile, 2,2'-azobis-2-methylbutyronitrile and 2,2'-azobis-2,4-dimethylvaleronitrile.

As described above, the organic solvent in which the monomer mixture and the polymerization initiator are dissolved is suspended in water and subjected to suspension copolymerization to precipitate a copolymer. Thereafter, the copolymer is purified by washing to remove monomers remaining in the copolymer and impurities such as organic solvent, dispersion stabilizer and polymerization initiator. The solvent for washing is not particularly limited so long as it is a solvent useful for the removal of those impurities, but water, methanol, ethanol, acetonitrile, acetone, toluene, hexane, tetrahydrofuran or the like is usually used. For washing the obtained copolymer, this may be attained, for example, by suction-filtering the liquid dispersion of the copolymer after suspension copolymerization, washing the resulting copolymer with stirring in the solvent for washing, and repeating the operation of suction-filtering and subsequent washing of the copolymer in a similar manner. In the process of this washing, the system may be heated, if necessary, to remove volatile impurities in the copolymer.

According to the present invention, an aromatic vinyl compound-acyloxystyrene-di(meth)acrylate compound copolymer is firstly obtained in this way, and the acyloxy group of the acyloxystyrene monomer component in the copolymer is then hydrolyzed, whereby the objective porous resin bead containing an aromatic vinyl compound-hydroxystyrene-di(meth)acrylate copolymer can be obtained.

For hydrolyzing the acyloxy group of the acyloxystyrene monomer component in the aromatic vinyl compound-acyloxystyrene-di(meth)acrylate compound copolymer, conventionally known methods and conditions may be employed. However, in the present invention, it is not necessary to hydrolyze the acyloxy groups of all acyloxystyrene monomer components in the obtained aromatic vinyl compound-acyloxystyrene-di(meth)acrylate compound copolymer, and it may be usually sufficient if a part of the acyloxy groups are hydrolyzed.

In the present invention, the catalyst used for the hydrolysis of the alkyloxy group of the acyloxystyrene monomer component in the aromatic vinyl compound-acyloxystyrene-di(meth)acrylate compound copolymer may be an acid catalyst such as hydrochloric acid and hydrobromic acid, or an alkali catalyst such as hydrazine, sodium hydroxide, tetramethylammonium hydroxide and aqueous ammonia. Preferred examples of the reaction solvent used for the hydrolysis include, but are not limited to, tetrahydrofuran, ethanol, methanol, dioxane and water.

In the present invention, the reaction conditions of the hydrolysis may be appropriately set. For example, in the case of performing the hydrolysis by using an aqueous sodium hydroxide solution containing ethanol, the amount of sodium hydroxide used is from 1 to 10 equivalents of the acyloxystyrene monomer component in the aromatic vinyl compound-acyloxystyrene-di(meth)acrylate compound copolymer, the amount of ethanol used is from 1 to 10 times the weight of water used, and the reaction is performed at 50 to 80°C for 1 to 12 hours. Preferably, the amount of sodium hydroxide used is from 1 to 5 equivalents of the acyloxystyrene monomer component, and the reaction is performed at 50 to 80°C for 1 to 6 hours. If the amount of sodium hydroxide used is too large or the reaction time is too long, the ester derived from the di(meth)acrylate compound is hydrolyzed and the solvent resistance of the porous resin bead is impaired. The reaction mixture after hydrolysis may be adjusted to near neutrality by using an acid or an alkali and then washed by the same method as described above to remove impurities.

As described above, according to the present invention, an aromatic vinyl compound-acyloxystyrene-di(meth) acrylate compound copolymer can be obtained through a suspension copolymerization of a monomer mixture containing an aromatic vinyl compound, an acyloxystyrene and a di(meth)acrylate compound, and a porous resin bead containing an aromatic vinyl compound-hydroxystyrene-di(meth)acrylate compound copolymer can be produced by hydrolyzing the acyloxy group of the acyloxystyrene monomer component in the obtained copolymer. Thereafter, if desired, the porous resin bead may be further subjected to a treatment such as drying or classification.

The thus-obtained porous resin particle can be suitably used as a support for solid phase synthesis to synthesize, for example, oligonucleotide. Incidentally, the oligonucleotide synthesis using the porous resin particle according to the present invention as a support for solid phase synthesis can be performed by a conventionally known method. For example, a linker is bound to the hydroxy group of the porous resin particle of the present invention, and amidite units are then bound one by one to give a predetermined base sequence from the end of the linker. This synthesis reaction can be performed using an automatic synthesis apparatus. For example, a linker-bound porous resin particle is packed in a flow-type reactor of the apparatus, various organic solvents such as acetonitrile and an amidite solution are sequentially fed thereto, and the reaction is repeated. Finally, the linker portion is cut off by hydrolysis or the like, whereby the objective oligonucleotide can be obtained. As for the linker, a conventionally known linker is appropriately used. For example, the oligonucleotide can be synthesized by binding a nucleoside linker having a structure shown below to the porous resin particle of the present invention.

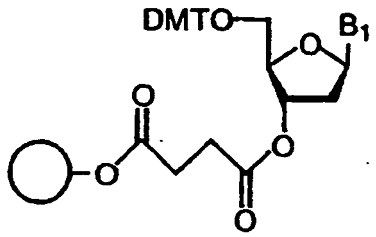

Herein, in the above-described structural formula, the circle represents the porous resin bead containing an aromatic vinyl compound-hydroxystyrene-di(meth)acrylate copolymer, which is obtained by the method of the present invention, DMT represents a protective dimethoxytrityl group at the 5'-position, and $B_1$ represents a base.

## Examples

The present invention is described below by referring to Examples, but the present invention is not limited to these Examples.

### Example 1

(Suspension Polymerization)

A 500 mL-volume separable flask equipped with a condenser, a stirrer and a nitrogen inlet tube was placed in a constant temperature water bath, and 2.5 g of polyvinyl alcohol and 250 g of distilled water were charged thereto and dissolved with stirring at 300 rpm to prepare an aqueous polyvinyl alcohol solution.

Separately, 50 g of styrene, 3.5 g (proportion in the monomer mixture: 369 μmol/g) of p-acetoxystyrene, 5 g

(proportion in the monomer mixture: 431 μmol/g) of ethylene glycol dimethacrylate, 85 g of 2-ethylhexanol, 25 g of isooctane and 1 g of benzoyl peroxide (25% aqueous product) were mixed to prepare a solution. This solution was added to the aqueous polyvinyl alcohol solution prepared above and after stirring at a stirring rate of 500 rpm in a nitrogen stream at room temperature, suspended in water, and suspension copolymerization was performed for 8 hours by raising the temperature to 80°C.

(Washing)

The obtained copolymer was washed by filtration using distilled water and acetone and then dispersed in acetone to make a total amount of about 1 L.

(Classification)

The resulting liquid dispersion was then allowed to stand still until the bead-like copolymer was precipitated so that the precipitate was not disturbed even when the liquid was tilted, and the supernatant acetone was then discarded. The operation of again adding acetone to the precipitate to make a total amount of about 500 mL, allowing the liquid dispersion to stand still, and then discarding acetone was repeated 10 times or more, thereby performing the classification. The thus-obtained liquid dispersion was filtered, and the residue was dried under reduced pressure to obtain a porous resin bead composed of a styrene-p-acetoxystyrene-ethylene glycol dimethacrylate copolymer, as powder.

(Hydrolysis)

A 500 mL-volume separable flask equipped with a condenser, a stirrer and a nitrogen inlet tube was dipped in a constant temperature water bath, and 20 g of the porous resin bead composed of a styrene-p-acetoxystyrene-ethylene glycol dimethacrylate copolymer, obtained above as powder, and 100 g of ethanol were charged thereto and dispersed with stirring. Subsequently, an aqueous solution prepared by dissolving 1 g of sodium hydroxide in 50 g of distilled water was added, and hydrolysis reaction was then performed for 3 hours by raising the temperature to 75°C. After the completion of reaction, the obtained reaction mixture was neutralized with hydrochloric acid and washed by filtration using distilled water and acetone. Finally, the obtained liquid dispersion was filtered and further dried under reduced pressure to obtain a porous resin bead composed of a styrene-p-hydroxystyrene-ethylene glycol dimethacrylate copolymer, as powder.

(Analysis)

The obtained porous resin bead was subjected to the following analyses.

(1) Median Diameter

The median diameter was measured by a laser diffraction/scattering method (a laser diffraction/scattering particle size distribution analyzer, LA-920, manufactured by Horiba Ltd.).

(2) Average Pore Diameter

The average pore diameter was measured by a mercury penetration method (a mercury porosimeter, PoreMaster 60GT, manufactured by Quantachrome Instruments).

(3) Amount of Hydroxy Group

The amount of hydroxy group was measured by titration according to JIS K 0070. That is, the hydroxy group of the porous resin bead to be measured was acetylated with a known amount of an acetylation reagent (acetic anhydride/pyridine), and the amount of the acetic anhydride not consumed in the actylation was determined by titration using potassium hydroxide, whereby the amount of the hydroxy group in the sample was calculated. More specifically, this was performed as follows.

The acetylation reagent was prepared by adding pyridine to 25 g of acetic anhydride to make a total amount of 100 mL, from 0.5 to 2 g of the measurement sample (dried porous resin bead) was weighed in a flask, and 0.5 mL of the acetylation reagent and 4.5 mL of pyridine were exactly added to the flask. The mixture in the flask was kept at 95 to 100°C for 2 hours and then allowed to cool to room temperature, and 1 mL of distilled water was added thereto. After heating for 10 minutes, the acetic anhydride not consumed in the acetylation was decomposed. The entire content in

the flask was transferred to a beaker, diluted with distilled water to a total amount of 150 mL and then titrated with an aqueous 0.5 N sodium hydroxide solution.

Separately, a blank was measured by the same operation as above without charging the measurement sample. The amount of the hydroxy group in the measurement sample was calculated according to the following formula (1), wherein A (μmol/g) is the amount of the hydroxyl group in the measurement sample, B (mL) is the titer of the aqueous potassium hydroxide solution when measuring a blank, C (mL) is the titer of the aqueous potassium hydroxide solution when measuring the measurement sample, f is the factor of the aqueous potassium hydroxide solution, and M (g) is the weight of the measurement sample weighed.

$$A = (B - C) \times 0.5\ (mol/L) \times f \times 1000 \div M \qquad (1)$$

The median diameter of the porous resin bead was 80 μm, the average pore diameter was 29 nm, and the amount of the hydroxy group was 491 μmol/g.

Example 2

(Production of Porous Resin Bead)

A porous resin bead composed of a styrene-p-hydroxystyrene-triethylene glycol dimethacrylate copolymer was obtained as powder in the same manner as in Example 1 except that in Example 1, 40 g of styrene, 3.5 g (proportion in the monomer mixture: 369 μmol/g) of p-acetoxystyrene, 15 g (proportion in the monomer mixture: 897 μmol/g) of triethylene glycol dimethacrylate, 80 g of 1-undecanol and 1 g of benzoyl peroxide (25% aqueous product) were used.

The obtained porous resin bead was analyzed in the same manner as in Example 1, and as a result, the median diameter was 75 μm, the average pore diameter was 34 nm, and the amount of the hydroxy group was 393 μmol/g.

(Binding of Nucleoside Linker to Porous Resin Bead)

The porous resin bead (1 g) obtained above, 0.18 g of DMT-dT-3'-succinate (produced by Beijing OM Chemicals), 0.09 g of HBTU (produced by Novabiochem), 0.084 mL of N,N-diisopropylethylamine and 10 mL of acetonitrile were mixed and reacted with stirring at room temperature for 12 hours, and the reaction mixture was washed by filtering using acetonitrile and dried. Thereto, 2.5 mL of CapA (20% acetic anhydride/80% acetonitrile), 2.5 mL of CapB (20% N-methylimidazole/30% pyridine/50% acetonitrile), 0.025 g of 4-dimethylaminopyridine and 5 mL of acetonitrile were mixed and reacted with stirring at room temperature for 12 hours, and the reaction mixture was washed by filtering using acetonitrile and then dried under reduced pressure to obtain a DMT-dT-3'-succinate-bound porous resin bead. The addition amount of the DMT-dT-3'-succinate determined by measuring the absorbance (412 nm) of the DMT group deprotected using a p-toluenesulfonic acid/acetonitrile solution is shown in Table 1.

(Synthesis of Oligonucleotide)

The DMT-dT-3'-succinate-bound porous resin bead obtained above was packed in a column, the column was set in an Applied Biosystems 3400 DNA synthesizer (manufactured by Applied Biosystems), and synthesis of oligonucleotide dT20 was performed under the conditions of a synthesis scale of 1 μmol and DMT-off. The column after the synthesis was dried, and the weight yield (mg/μmol) of the obtained oligonucleotide determined by the weight measurement is shown in Table 1.

Excision and deprotection of oligonucleotide from the porous resin bead were performed by a reaction using concentrated aqueous ammonia at 55°C for 12 hours. The OD yield of the obtained oligonucleotide as determined by ultraviolet absorbance measurement (260 nm) is shown in Table 1.

The proportion of dT20 (full-length) in the obtained oligonucleotide as determined by HPLC measurement (Alliance UV System manufactured by Waters Corp., Hydrosphere C 18 manufactured by YMC) is shown in Table 1.

Example 3

(Production of Porous Resin Bead)

A porous resin bead composed of a styrene-p-hydroxystyrene-1,6-hexanediol dimethacrylate copolymer was obtained as powder in the same manner as in Example 1 except that in Example 1, 40 g of styrene, 3.5 g (proportion

in the monomer mixture: 369 μmol/g) of p-acetoxystyrene, 15 g (proportion in the monomer mixture: 1,008 μmol/g) of 1,6-hexanediol dimethacrylate, 75 g of 1-decanol and 1 g of benzoyl peroxide (25% aqueous product) were used.

The obtained porous resin bead was analyzed in the same manner as in Example 1, and as a result, the median diameter was 72 μm, the average pore diameter was 26 nm, and the amount of the hydroxy group was 446 μmol/g.

Example 4

(Production of Porous Resin Bead)

A porous resin bead composed of a styrene-p-hydroxystyrene-1,9-nonanediol diacrylate copolymer was obtained as powder in the same manner as in Example 1 except that in Example 1, 48 g of styrene, 2.5 g (proportion in the monomer mixture: 264 μmol/g) of p-acetoxystyrene, 8 g (proportion in the monomer mixture: 510 μmol/g) of 1,9-nonanediol diacrylate, 90 g of 1-nonanol and 1 g of benzoyl peroxide (25% aqueous product) were used.

(Binding of Nucleoside Linker to Porous Resin Bead and Synthesis of Oligonucleotide)

Production of a DMT-dT-3'-succinate-bound porous resin bead and synthesis of oligonucleotide dT20 were performed in the same manner as in Example 2. The bound amount of DMT-dT-3'-succinate, the weight yield of oligonucleotide, the OD amount of oligonucleotide, and the proportion of dT20 (full-length) are shown in Table 1.

Comparative Example 1

(Production of Porous Resin Bead)

A porous resin bead composed of a styrene-p-hydroxystyrene-divinylbenzene copolymer was obtained as powder in the same manner as in Example 1 except that in Example 1, 48 g of styrene, 3.5 g (proportion in the monomer mixture: 369 μmol/g) of p-acetoxystyrene, 7 g (proportion in the monomer mixture: 506 μmol/g) of divinylbenzene (55%), 52 g of 2-ethylhexanol, 23 g of isooctane and 1 g of benzoyl peroxide (25% aqueous product) were used.

The obtained porous resin bead was analyzed in the same manner as in Example 1, and as a result, the median diameter was 86 μm, the average pore diameter was 33 nm, and the amount of the hydroxy group was 422 μmol/g.

(Binding of Nucleoside Linker to Porous Resin Bead and Synthesis of Oligonucleotide)

Production of a DMT-dT-3'-succinate-bound porous resin bead and synthesis of oligonucleotide dT20 were performed in the same manner as in Example 2. The bound amount of DMT-dT-3'-succinate, the weight yield of oligonucleotide, the OD amount of oligonucleotide, and the proportion of dT20 (full-length) are shown in Table 1.

Comparative Example 2

(Production of Porous Resin Bead)

A porous resin bead composed of a styrene-p-hydroxystyrene-divinylbenzene copolymer was obtained as powder in the same manner as in Example 1 except that in Example 1, 48 g of styrene, 3.5 g (proportion in the monomer mixture: 369 μmol/g) of p-acetoxystyrene, 7 g (proportion in the monomer mixture: 506 μmol/g) of divinylbenzene (55%), 75 g of 1-decanol and 1 g of benzoyl peroxide (25% aqueous product) were used.

The obtained porous resin bead was analyzed in the same manner as in Example 1, and as a result, the median diameter was 116 μm, the average pore diameter was 68 nm, and the amount of the hydroxy group was 432 μmol/g.

(Binding of Nucleoside Linker to Porous Resin Bead and Synthesis of Oligonucleotide)

Production of a DMT-dT-3'-succinate-bound porous resin bead and synthesis of oligonucleotide dT20 were performed in the same manner as in Example 2. The bound amount of DMT-dT-3'-succinate, the weight yield of oligonucleotide, the OD amount of oligonucleotide, and the proportion of dT20 (full-length) are shown in Table 1.

Table 1

| | Example 2 | Example 4 | Comparative Example 1 | Comparative Example 2 |
|---|---|---|---|---|
| Median diameter (μm) | 75 | 83 | 86 | 116 |
| Average pore diameter (nm) | 34 | 75 | 33 | 68 |
| Amount of hydroxy group (μmol/g) | 393 | 350 | 422 | 432 |
| Bound amount of DMT-dT-3'-succinate (μmol/g) | 207 | 184 | 200 | 198 |
| Weight yield of oligonucleotide (μmol/g) | 6.7 | 6.6 | 5.7 | 5.4 |
| OD Yield of oligonucleotide (OD/μmol) | 197 | 191 | 162 | 150 |
| Proportion of dT20 (full-length) (%) | 95 | 94 | 93 | 92 |

As apparent from the results in Table 1, when the porous resin beads of Examples 2 to 4 according to the present invention are used, as compared with the porous resin beads of Comparative Examples 1 and 2, the synthesis yield of oligonucleotide can be increased while maintaining a high full-length percentage.

## Claims

**1.** A method for producing a porous resin bead containing an aromatic vinyl compound-hydroxystyrene-di(meth)acrylate copolymer, the method comprising:

dissolving a monomer mixture containing an aromatic vinyl compound, an acyloxystyrene and a di(meth)acrylate compound, and a polymerization initiator in an organic solvent to obtain a solution containing the monomer mixture and the polymerization initiator;
suspending the solution in water in the presence of a dispersion stabilizer;
performing a suspension copolymerization to thereby obtain an aromatic vinyl compound-acyloxystyrene-di (meth)acrylate compound copolymer; and
hydrolyzing an acyloxy group of the acyloxystyrene monomer component in said copolymer.

**2.** The method for producing a porous resin bead according to claim 1, wherein the di(meth)acrylate compound is at least one member selected from the group consisting of a (poly)ethylene glycol di(meth)acrylate and an alkanediol di(meth)acrylate.

**3.** The method for producing a porous resin bead according to claim 1, wherein the monomer mixture contains the acyloxystyrene in a proportion of 80 to 800 μmol/g and the di(meth)acrylate compound in a proportion of 200 to 2,000 μmol/g.

**4.** The method for producing a porous resin bead according to claim 1, wherein the organic solvent is at least one member selected from the group consisting of a hydrocarbon and an alcohol, and the organic solvent is used in a weight ratio of 0.5 to 2.5 based on the monomer mixture.

## Patentansprüche

**1.** Verfahren zum Herstellen eines porösen Harzkorns, das ein aromatische Vinylverbindung - Hydroxystyrol - Di(meth) acrylat - Copolymer enthält, wobei das Verfahren umfasst:

Lösen eines Monomergemisches, das eine aromatische Vinylverbindung, ein Acyloxystyrol und eine Di(meth) acrylatverbindung enthält, und eines Polymerisationsinitiators in einem organischen Lösungsmittel, um eine Lösung zu erhalten, die das Monomergemisch und den Polymerisationsinitiator enthält;

Suspendieren der Lösung in Wasser in der Gegenwart eines Dispersionsstabilisators;
Durchführen einer Suspensionscopolymerisation, um **dadurch** ein aromatische Vinylverbindung - Acyloxystyrol - Di(meth)acrylatverbindung - Copolymer zu erhalten;
Hydrolysieren einer Acyloxygruppe der Acyloxystyrolmonomerkomponente in besagtem Copolymer.

**2.** Verfahren zum Herstellen eines porösen Harzkorns gemäß Anspruch 1, wobei die Di(meth)acrylatverbindung mindestens ein Mitglied, ausgewählt aus der Gruppe bestehend aus einem (Poly)ethylenglycol-di(meth)acrylat und einem Alkandiol-di(meth)acrylat, ist.

**3.** Verfahren zum Herstellen eines porösen Harzkorns gemäß Anspruch 1, wobei das Monomergemisch das Acyloxystyrol in einem Anteil von 80 bis 800 μmol/g und die Di(meth)acrylatverbindung in einem Anteil von 200 bis 2.000 μmol/g enthält.

**4.** Verfahren zum Herstellen eines porösen Harzkorns gemäß Anspruch 1, wobei das organische Lösungsmittel mindestens ein Mitglied, ausgewählt aus der Gruppe bestehend aus einem Kohlenwasserstoff und einem Alkohol, ist, und das organische Lösungsmittel in einem Gewichtsverhältnis von 0,5 bis 2,5, basierend auf dem Monomergemisch, verwendet wird.

## Revendications

**1.** Procédé de production d'une bille de résine poreuse contenant un copolymère de composé vinylique aromatique-hydroxystyrène-di(méth)acrylate, le procédé comprenant :

la dissolution d'un mélange de monomères contenant un composé vinylique aromatique, un acyloxystyrène et un composé de di(méth)acrylate, et un initiateur de polymérisation dans un solvant organique pour obtenir une solution contenant le mélange de monomères et l'initiateur de polymérisation ;
à mettre la solution en suspension dans de l'eau en présence d'un stabilisateur de dispersion ;
à réaliser une copolymérisation en suspension pour obtenir par là un copolymère de composé vinylique aromatique-acyloxystyrène-di(méth)acrylate ; et
à hydrolyser un groupe acyloxy du constituant monomère d'acyloxystyrène dans ledit copolymère.

**2.** Procédé de production d'une bille de résine poreuse selon la revendication 1, dans lequel le composé de di(méth) acrylate est au moins un élément choisi dans le groupe constitué de di(méth)acrylate de (poly)éthylèneglycol et de di(méth)acrylate d'alcanediol.

**3.** Procédé de production d'une bille de résine poreuse selon la revendication 1, dans lequel le mélange de monomères contient l'acyloxystyrène dans une proportion de 80 à 800 μmol/g et le composé de di(méth)acrylate dans une proportion de 200 à 2 000 μmol/g.

**4.** Procédé de production d'une bille de résine poreuse selon la revendication 1, dans lequel le solvant organique est au moins un élément choisi dans le groupe constitué d'un hydrocarbure et d'un alcool, et le solvant organique est utilisé dans un rapport massique de 0,5 à 2,5 rapporté au mélange de monomères.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 52023193 A
- JP 58210914 A
- JP 5086132 A
- JP 2005097545 A